# EUROPÄISCHE PATENTANMELDUNG

(11) **EP 1 715 307 A2**
(43) Veröffentlichungstag der Anmeldung: **25.10.2006**
(21) Anmeldenummer: 05026547.9
(22) Anmeldetag: 06.12.2005
(51) Int. Cl.: G01G 11/00, G01G 15/00, B65G 15/14

(54) **Fördereinrichtung mit Wägevorrichtung**

(30) Priorität: 20.04.2005 DE 102005018395
(71) Anmelder: UHLMANN PAC-SYSTEME GmbH & Co. KG, 88471 Laupheim (DE)
(72) Erfinder: Fochler, Fritz, 89171 Illerkirchberg (DE)
(74) Vertreter: Hentrich, Swen

(57) **Zusammenfassung**

Die Erfindung betrifft eine Fördereinrichtung für Waren (2) mit einem Warentransportband (3) und einer dem Warentransportband (3) zugeordneten Kontrollwaage (6) für die Waren (2). Das Warentransportband (3) ist zweifach vorgesehen, wobei die beiden Transportbänder (3) jeweils um zwei randseitige Umlenkrollen (4) mit vertikal orientierten Rollenachsen (5) umlaufen und so jeweils ein inneres, dem gegenüberliegenden Transportband (3) zuweisendes Trumm und ein äußeres Trumm definieren. Unterhalb der beiden Transportbänder (3) ist die Kontrollwaage (6) mit einem um zwei horizontal und senkrecht zur Transportrichtung orientierten Rollenachsen umlaufenden Wägeband (9) angeordnet, wobei im Bereich des Wägebandes (9) das innere Trumm zumindest eines der Transportbänder (3) in Richtung des äußeren Trumms abgelenkt ist.

## Beschreibung

Die Erfindung betrifft eine Fördereinrichtung für Waren mit einem Warentransportband und einer dem Warentransportband zugeordneten Kontrollwaage für die Ware.

Fördereinrichtungen sind in der Praxis weit verbreitet und werden insbesondere bei Verpackungsmaschinen eingesetzt, bei denen Produkte in Verpackungen wie Schachteln, Boxen oder dergleichen verpackt und sodann als fertig konfektionierte Ware für die Auslieferung zum Kunden abtransportiert werden. Damit der Kunde fehlerfreie Waren erhält, ist es erforderlich, die einzelnen Schritte bei der Konfektionierung der Ware zu überprüfen und insbesondere auch die Fehlerfreiheit am Ende des Verarbeitungsprozesses zu kontrollieren. Dazu ist auch die Kontrollwaage geeignet, mit der die Masse der Ware überprüft werden kann, ob diese innerhalb vorgegebener Toleranzen liegt. Allerdings ist es bei den bekannten Födereinrichtungen erforderlich, dass die Waren vom Transportband entfernt und zu der Kontrollwaage überführt werden, so dass die Ware den Verarbeitungs- bzw. Transportprozess verlässt und später wieder eingegliedert werden muss.

Der Erfingung liegt die Aufgabe zugrunde, eine Fördereinrichtung der eingangs genannten Art so auszubilden, dass eine Erhöhung der Prozesssicherheit erreicht wird.

Diese Aufgabe wird nach der Erfindung bei einer Fördereinrichtung der eingangs genannten Art dadurch gelöst, daß das Warentransportband zweifach vorgesehen ist, daß die beiden Transportbänder jeweils um zwei randseitige Umlenkrollen mit vertikal orientierten Rollenachsen umlaufen und so jeweils ein inneres, dem gegenüberliegenden Transportband zuweisendes Trumm und ein äußeres Trumm definieren, daß unterhalb der beiden Transportbänder die Kontrollwaage mit einem um zwei horizontal und senkrecht zur Transportrichtung orientierten Rollenachsen umlaufenden Wägeband angeordnet ist, und daß im Bereich des Wägebandes das innere Trumm zumindest eines der Transportbänder in Richtung des äußeren Trumms abgelenkt ist.

Mit einer derartigen Gestaltung ist der Vorteil verbunden, dass auch während des Wägevorganges die Waren den Verarbeitungsprozess nicht verlassen, wozu die Waren zwischen den beiden Warentransportbändern geklemmt über die Kontrollwaage transportiert werden, bei der lediglich die Klemmung der Waren, beschränkt für die Dauer des Wägeprozesses, aufgehoben wird. In Förderrichtung hinter der Kontrollwaage übernehmen die beiden Transportbänder erneut die Klemmung der Waren, so dass der Verarbeitungsschritt des Warentransportes mit den Warentransportbändern durch den Wägevorgang unterbrochen ist, ohne daß dabei die Warentransportbänder die Positionskontrolle über die Waren verlieren, die unverändert zwischen den beiden Warentransportbänder lokalisiert sind.

Nach einer bevorzugten Ausführungsform der Erfindung ist vorgesehen, dass dem Wägeband der Kontrollwaage in Transportrichtung ein Zuführband vorgelagert und ein Abführband nachgelagert ist. Mit dieser Ausführungsform ist der besondere Vorteil verbunden, dass der Wägeprozess selber ohne störende Einflüsse durchgeführt werden kann, da zunächst die Waren auf dem Zuführband abgelegt werden und dort zur Ruhe kommten, so dass Erschütterungen den Wägeprozess auf dem Wägeband nicht stören. Von dem Wägeband wird die Ware an das Abführband übergeben, um die Eingliederung in den weiteren Förderprozess wiederum ohne Erschütterungen des Wägebandes zu ermöglichen. Dazu ist im Rahmen der Erfindung vorgesehen, dass im Bereich oberhalb des Zuführbandes das innere Trumm des abgelenkten Transportbandes um zwei Ablenkrollen nach außen geführt ist und daß weiterhin im Bereich oberhalb des Abführbandes das innere Trumm um zwei Ablenkrollen nach innen geführt ist, so dass gezielt oberhalb des Zuführbandes die Klemmung der Ware durch die beiden Warentransportbänder beendet und oberhalb des Abführbandes wieder hergestellt wird, was in einfacher Weise durch eine Kontrolle der Lage des Bahnlaufes des inneren Trumms erfolgt.

Günstig ist es weiterhin, wenn die Kontrollwaage höhenverstellbar auf einer an dem Maschinengestell angeordneten Konsole gelagert ist, da so erreicht werden kann, dass die Waren durch die beiden Transportbänder nicht schleifend auf das Zuführband bzw. das Wägeband transportiert werden müssen, sondern dass über eine Höhenverstellung der Kontrollwaage ein geringer Abstand der Waren gewährleistet sein kann, der bei Aufhebung der Klemmung unter der Wirkung der Schwerkraft überwunden wird. Zwar ist es möglich, die Freistrecke dabei auf wenige Millimeter oder sogar den Bruchteil eines Millimeters zu begrenzen, jedoch treten dabei stets Schwingungen auf, so dass sich bei dieser Ausführungsform insbesondere die Präsenz des Zuführbandes vorteilhaft bemerkbar macht.

Vorteilhaft ist es auch, wenn die Kontrollwaage parallel zur Transportrichtung verstellbar gelagert ist, da so die Möglichkeit besteht, eine mittige Positionierung der Waren auf dem Wägeband bzw. dem Zuführband zu gewährleisten.

Im Rahmen der Erfindung gleichfalls vorgesehen ist es, dass das innere Trumm beider Transportbänder nach außen abgelenkt ist, da so die Ablenkung eines einzelnen inneren Trummes geringer ausfallen kann und darüber hinaus eine symmetrische Krafteinwirkung der beiden Transportbänder auf die Waren gegeben ist.

Ein weiterhin besonders bevorzugte Ausführungsform der Erfindung ist dadurch gekennzeichnet, dass der Kontrollwaage ein erster Motor zur Höhenverstellung und ein zweiter Motor zur Verstellung in Transportrichtung zugeordnet ist, dass ein Sensor zu Erkennung der Lage und/oder der Abmessungen der mit den Transportbändern geförderten Waren vorgesehen ist und daß eine Steuereinheit zur Auswertung der Sensorsignale und zur Ansteuerung des ersten Motors und des zweiten Motors zur automatisierten Positionierung der Kontrollwaage vorgesehen ist. Dies ermöglicht eine automatisierte Verarbeitung der mit der Fördereinrichtung transportierten Waren unabhängig von einem Benutzereingriff auch dann, wenn ein Formatwechsel der Waren vorliegt oder diese mit gewissen Variationen durch die Warentransportbänder der Kontrollwaage zugeführt werden.

Um Kosten zu sparen ist dabei vorgesehen, dass die Steuereinheit in die Maschinensteuerung einer Verpackungsmaschine integriert ist.

Im folgenden wird die Erfindung an einem in der Zeichnung dargestellten Ausführungsbeispiel näher erläutert; es zeigen:

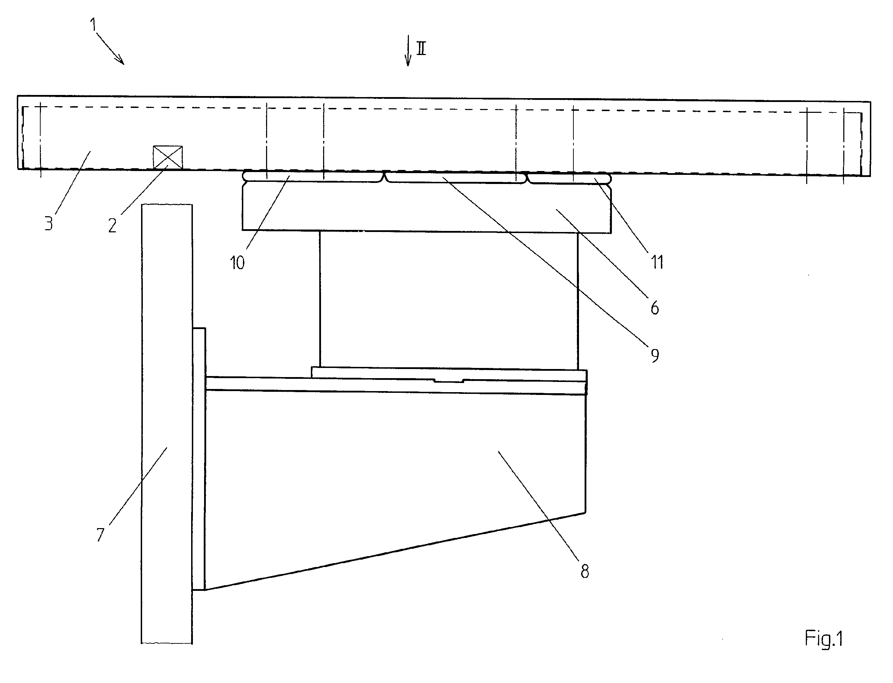

- Fig. 1: die erfindungsgemäße Fördereinrichtung in einer Seitenansicht, und
- Fig. 2: eine Sicht aus Richtung des Pfeiles II aus Figur 1.

In der Zeichnung ist eine Fördereinrichtung 1 dargestellt, wie diese beispielsweise bei Verpackungsmaschinen Verwendung findet, um mit der Verpackungsmaschine produzierte Waren 2 zum Ende des Produktionsprozesses aus diesen herauszuführen. Die Fördereinrichtung 1 umfasst zwei Warentransportbänder 3, die jeweils um zwei randseitige Umlenkrolle 4 mit vertikal orientierten Rollenachsen 5 umlaufen und so jeweils ein inneres, dem gegenüberliegenden Transportband 3 zuweisendes Trumm und ein äußeres Trumm definieren. Unterhalb der beiden Transportbänder 3 ist eine Kontrollwaage 6 angeordnet, die höhenverstellbar auf einer an dem Maschinengestell 7 der Verpackungsmaschine angeordneten Konsole 8 gelagert ist. Weiterhin ist die Kontrollwaage 6 auch parallel zur Transportrichtung der Waren 2 verstellbar. Die Kontrollwaage 6 weist ein um zwei horizontal und senkrecht zur Transportrichtung orientierte Rollenachsen umlaufendes Wägeband 9 auf, dem in Transportrichtung ein Zuführband 10 vorgelagert und ein Abführband 11 nachgelagert ist.

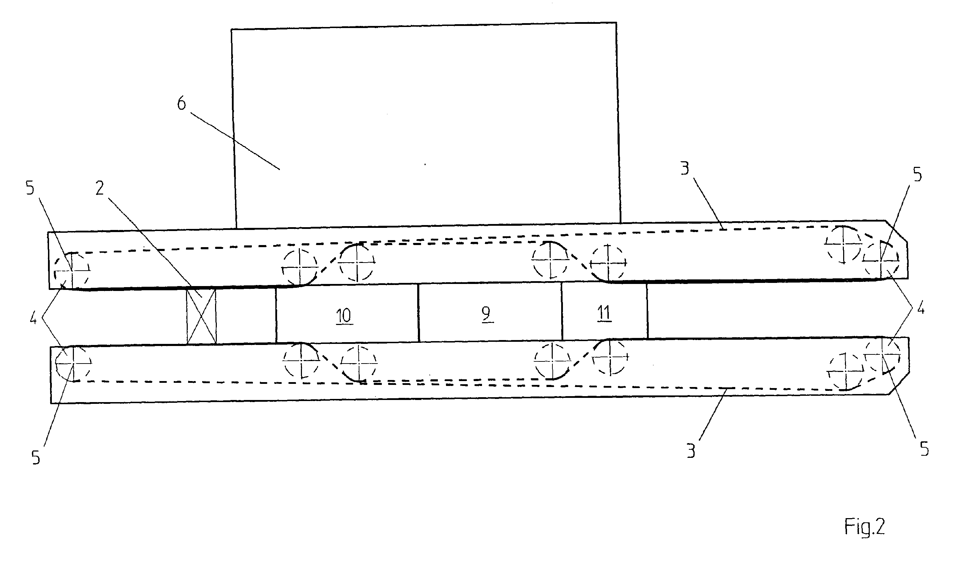

Wie insbesondere aus Figur 2 ersichtlich ist, ist im Bereich des Wägebandes 9 das innere Trumm zumindest eines der Transportbänder 3, in dem gezeigten Ausführungsbeispiel beider Transportbänder 3, in Richtung des äußeren Trumms abgelenkt, wobei in dem gezeigten Ausführungsbeispiel die Ablenkung der beiden innneren Trumms nach außen im Bereich oberhalb des Zuführbandes 10 und die Ablenkung zurück in die Ausgangsebene im Bereich oberhalb des Abführbandes 11 erfolgt, so dass die Klemmung einer zwischen den beiden Transportbänder 3 herangeführten Ware 2 oberhalb des Zuführbandes 10 beendet wird und die Ware 2 unter der Wirkung der Schwerkraft auf das Zuführband 10 fällt. Um dabei die Fallhöhe auf das erforderliche Mindestmaß begrenzen zu können, ist die Kontrollwaage 6 höhenverstellbar gelagert. Von dem Zuführband 10 wird die Ware 2 auf das Wägeband 9 überführt und dort gewogen, woran sich dann die Übergabe an das Abführband 11 anschließt. Von dem Abführband 11 wird die Ware durch die beiden Transportbänder 3 wieder entnommen, in dem die beiden inneren, wieder nach innen abgelenkten Trumms die Ware 2 erneut zwischen den beiden Transportbändern 3 klemmen.

Um den Ablauf automatisieren zu können, ist der Kontrollwaage 6 ein erster Motor zur Höhenverstellung und ein zweiter Motor zur Verstellung in Transportrichtung zugeordnet und weiterhin ein Sensor zur Erkennung der Lage und/oder der Abmessungen der mit den Transportbändern 3 geförderten Waren 2 vorgesehen, wobei eine Steuereinheit zur Auswertung der Sensorsignale und zur Ansteuerung des ersten Motors und des zweiten Motors zur automatisierten Positionierung der Kontrollwaage 6 vorgesehen ist. Die Steuereinheit ist in die Maschinensteuerung der Verpackungsmaschinen integriert.

## Patentansprüche

1. Fördereinrichtung für Waren (2) mit einem Warentransportband (3) und einer dem Warentransportband (3) zugeordneten Kontrollwaage (6) für die Waren (2), **dadurch gekennzeichnet, daß** das Warentransportband (3) zweifach vorgesehen ist, daß die beiden Transportbänder (3) jeweils um zwei randseitige Umlenkrollen (4) mit vertikal orientierten Rollenachsen (5) umlaufen und so jeweils ein inneres, dem gegenüberliegenden Transportband (3) zuweisendes Trumm und ein äußeres Trumm definieren, daß unterhalb der beiden Transportbänder (3) die Kontrollwaage (6) mit einem um zwei horizontal und senkrecht zur Transportrichtung orientierten Rollenachsen umlaufenden Wägeband (9) angeordnet ist, und daß im Bereich des Wägebandes (9) das innere Trumm zumindest eines der Transportbänder (3) in Richtung des äußeren Trumms abgelenkt ist.

2. Fördereinrichtung nach Anspruch 1, **dadurch gekennzeichnet, daß** dem Wägeband (9) der Kontrollwaage (6) in Transportrichtung ein Zuführband (10) vorgelagert und ein Abführband (11) nachgelagert ist.

3. Fördereinrichtung nach Anspruch 2, **dadurch gekennzeichnet, daß** im Bereich oberhalb des Zuführbandes (10) das innere Trumm des abgelenkten Transportbandes (3) um zwei Ablenkrollen nach außen geführt ist.

4. Fördereinrichtung nach Anspruch 2 oder 3, **dadurch gekennzeichnet, daß** im Bereich oberhalb des Abführbandes (11) das innere Trumm um zwei Ablenkrollen nach innen geführt ist.

5. Fördereinrichtung nach einem der Ansprüche 1 bis 4, **dadurch gekennzeichnet, daß** die Kontrollwaage (6) höhenverstellbar auf einer an dem Maschinengestell (7) angeordneten Konsole (8) gelagert ist.

6. Fördereinrichtung nach einem der Ansprüche 1 bis 5, **dadurch gekennzeichnet, daß** die Kontrollwaage (6) parallel zur Transportrichtung verstellbar gelagert ist.

7. Fördereinrichtung nach einem der Ansprüche 1 bis 6, **dadurch gekennzeichnet, daß** das innere Trumm beider Transportbänder (3) nach außen abgelenkt ist.

8. Fördereinrichtung nach Anspruch 6 oder 7, **dadurch gekennzeichnet, daß** der Kontrollwaage (6) ein erster Motor zur Höhenverstellung und ein zweiter Motor zur Verstellung in Transportrichtung zugeordnet ist, daß ein Sensor zur Erkennung der Lage und/oder der Abmessungen der mit den Transportbändern (3) geförderten Waren (2) vorgesehen ist, und daß eine Steuereinheit zur Auswertung der Sensorsignale und zur Ansteuerung des ersten Motors und des zweiten Motors zur automatisierten Positionierung der Kontrollwaage vorgesehen ist.

9. Fördereinrichtung nach Anspruch 8, **dadurch gekennzeichnet, daß** die Steuereinheit in die Maschinensteuerung einer Verpackungsmaschine integriert ist.
